# EUROPEAN PATENT SPECIFICATION

(11) **EP 2 965 006 B1**
(45) Date of publication and mention of the grant of the patent: **24.07.2019**
(21) Application number: 14707754.9
(22) Date of filing: 03.03.2014
(51) Int. Cl.: F23J 15/06, F01K 23/06, B01D 53/26

(54) **POWER PLANT**
KRAFTWERK
CENTRALE THERMIQUE

(30) Priority: 04.03.2013 IN 620DE2013; 16.07.2013 EP 13176680
(43) Date of publication of application: 13.01.2016
(73) Proprietor: Shell Internationale Research Maatschappij B.V., 2596 HR The Hague (NL)
(72) Inventor: MARWAH, Sumita, Bangalore 560048 (IN); PATIL, Ganesh Krisna, Bangalore 560048 (IN); SCHRADER, Guillo Alexander, NL-1031 HW Amsterdam (NL)
(74) Representative: Shell Legal Services IP
(86) International application number: PCT/EP2014/054072
(87) International publication number: WO 2014/135496

(56) References cited:
- US-A- 5 265 410
- US-A1- 2003 131 582
- US-A1- 2005 184 009
- US-A1- 2010 047 634
- US-A1- 2011 126 549

## Description

The invention relates to a power plant comprising a syngas combustor, such as for example a combustor in an integrated gasification combined cycle (IGCC) plant. Such IGCC plants typically include an upstream gasifier to produce syngas by partial combustion of a hydrocarbon feed, such as pulverized coal, and a downstream combustor to combust the syngas produced in the upstream gasifier.

Syngas is a mixture of carbon monoxide and hydrogen. Yields of generated energy are higher with syngas having higher hydrogen content. The hydrogen content in the syngas can be increased by the water-gas shift reaction. With this reaction carbon monoxide reacts with water to form carbon dioxide and hydrogen:

CO(g) + H2O(l) → CO2(g) + H2(g)

Heat can be extracted from the flue gas discharged from the combustor to be used for generating power, typically via a steam cycle.

The flue gas includes water vapour. The water content in the flue gas is mainly produced by the combustion of hydrogen in the combustor. Water is also introduced by the syngas fuel and by air supplied to the combustor. A further source of the flue gas water content is water used for washing the flue gas to remove pollutants, such as SOx, NOx and fly ash.

Due to the high water vapour content of the flue gas, the temperature of the flue gas should be maintained well above the dew point to prevent corrosion of plant equipment. As a consequence, part of the heat in the flue gas cannot be recovered and used for power generation.

US5265410 discloses a coal gasification composite power generation system including a primary combustor for combustion of coal fuel under a reducing condition, a secondary combustor for effecting complete combustion of the resulting product. The secondary combustor is supplied with the primary combustor product gas, air or oxygen for complete burning of the primary combustor product gas and an additive gas for controlling the combustion gas temperature in the secondary combustor consisting either of steam or carbon dioxide. A gas turbine drives the compressor and is driven by a working fluid consisting of the resulting combustion gas from the secondary combustor. Either CO2 or H2O, converted to steam in a steam generator, is fed to the secondary combustor for controlling the temperature of the combustion gas therein.

US2003/131582 discloses a coal syngas or other syngas fired power plant with no atmospheric emissions. Coal or other starter fuel is gasified within a gasifier which also receives oxygen and steam. The oxygen is provided from an air separator. Syngas produced within the gasifier is combusted within a gas generator along with oxygen from the air separator. Water is also introduced into the gas generator to control the temperature of combustion of the syngas with the oxygen. Products of combustion including steam and carbon dioxide are produced within the gas generator. The combustion products are expanded through a turbine for power output and then separated, such as within a condenser. Water discharged from the condenser is at least partially recirculated back to the gasifier and the gas generator. Carbon dioxide from the separator is compressed for capture without release into the atmosphere.

US2011/126549 discloses a power plant for combusting a hydrocarbon fuel with oxygen to produce high temperature high pressure products of combustion. These products of combustion are routed through an expander to generate power. The products of combustion are substantially free of oxides of nitrogen because the oxidizer is oxygen rather than air. The fuel can be a gaseous or liquid fuel. In one embodiment, the vaporizer gasifies the oxygen by absorption of heat from air before the air is routed into a separate heat engine, such as a gas turbine. The gas turbine thus operates on cooled air and has its power output increased.

US2010/047634 discloses a portable fuel cell system with water recovery capabilities. The system generates one or more exhaust streams from which water can be recovered. A water removal system contained in the portable fuel cell system package draws water from an exhaust stream. The exhaust may include a burner exhaust, a reformer exhaust, and/or a fuel cell exhaust. The water can then be provided to the incoming fuel.

It is an object of the invention to reduce consumption of energy and to improve the overall efficiency of the combustion process.

The object of the invention is achieved with a power plant according to claim 1, comprising a combustor with a flue gas outlet and one or more water selective separators downstream of the flue gas outlet to separate water from the flue gas.

Since the water content of the flue gas is substantially reduced, the dew point is lowered and more heat can be recovered from the flue gas. This contributes to a substantial improvement of the overall efficiency of the power generating process.

It has been found that about 70 % of the water content of the flue gas can be recovered. This water has a high degree of purity and can for example be reused as make-up water for a steam cycle. This reduces the need to prepare fresh make-up water, which results in substantial energy savings, particularly if the make-up water is prepared from sea water, e.g., by desalination or by reverse osmosis using membrane filtration.

The recovered water can also be used as cooling water in any part of the process or for any other suitable purpose.

The plant further comprises a CO shift cell with a syngas inlet, a water inlet and an outlet operatively connected to the inlet of the combustor for the transport of H₂ enriched syngas to the combustor, wherein a water return line is configured to return at least a part of the separated water from the separator to the water inlet of the CO shift cell. In the CO shift cell, the hydrogen content of the syngas is substantially increased by the water-gas shift reaction. CO₂ formed with this reaction is separated and discharged, for instance by scrubbing using amine solvents. This way, the hydrogen content of the enriched syngas fed to the combustor is substantially increased without increasing water consumption in the process as a whole.

The water selective separator can for instance be a filter membrane. Suitable membranes include hydrophilic stainless steel membranes, such as tubular stainless steel membranes of Hyflux, and hydrophilic ceramic membranes, such as ceramic membranes from CEPAration in Helmond, the Netherlands. The ceramic membranes can for instance be made of α-alumina.

The membranes can for instance include ultrafiltration membranes, with average pore sizes of 20 - 50 nm or microfiltration (MF) membranes with average pore sizes of about 200 - 1000 nm.

The water can for example be removed from the flue gas by permeation through the membrane, driven by a mild underpressure, e.g., of about 0.05 - 0.25 bar, and subsequent condensation. Alternatively, or additionally, water can be removed from the flue gas using other types of separators, such as a condenser or desiccants.

Optionally, the plant may comprise more than one water selective separator, e.g., in series or in parallel arrangement. The separators can be of the same type or of different types.

The plant may include one or more gasifiers to produce syngas by partial combustion of a hydrocarbon feed, such as pulverized coal, biomass, oil or mixtures thereof. Such a gasifier typically comprises a number of burners supplying an oxygen containing gas, such as air, to the gasifier and an outlet for the discharge of syngas. The syngas is subsequently treated in a CO shift cell to increase the hydrogen content.

The power plant can be used for a process for generating power by combustion of syngas in the combustor. Water is separated from flue gas from the combustor and is reused by feeding it to the syngas to increase its hydrogen content before the syngas is fed to the combustor. The water can also be reused as cooling water or as make-up water for a steam cycle.

The invention will be elucidated with reference to the accompanying drawing.

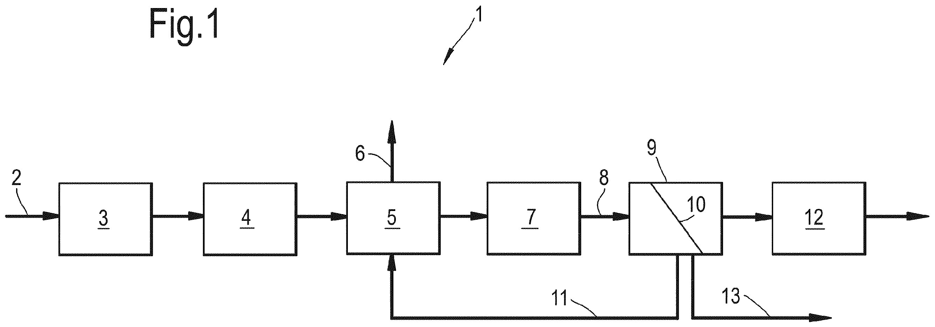

Figure 1: shows a diagrammatic presentation of an integrated gasification combined cycle (IGCC) plant.

Figure 1 shows a flow diagram schematically representing a plant 1 with a feed line 2 for the supply of a hydrocarbon feed, such as pulverized coal. The feed line 2 leads to a gasifier 3, where the hydrocarbon feed is partially combusted to produce syngas. Oxygen containing gas is injected into the gasifier 3 via burners (not shown) to achieve partial combustion of the hydrocarbon feed for the production of syngas. Raw syngas is discharged and washed in a cleaning unit 4 to remove pollutants, such as fly ash. The cleaned syngas mainly comprises hydrogen gas H₂ and CO.

The cleaned syngas is subsequently passed to a CO shift cell 5, where water vapour is mixed into the syngas flow to initiate a water-gas shift reaction. Water reacts with CO to form CO₂ and H₂. The resulting CO₂ is separated and discharged via a discharge line 6. An enriched syngas is obtained with a high H₂ content. The water-gas shift process can for example be performed in two stages: a first stage comprising a high-temperature shift at about 350 °C followed by a second stage at about 190-210 °C. Catalysts can be used, such as iron oxide promoted with chromium oxide for the first stage and copper on a mixed support composed of zinc oxide and aluminum oxide for the second stage.

The resulting enriched syngas is then fed to a combustor 7. An oxygen containing gas, such as air, is fed into the combustor 7 via burners. The H₂ content of the syngas reacts with the injected O₂ to form water.

The combustor 7 will typically be integrated in a steam cycle for using the generated heat to generate power by a steam turbine. Hot flue gas, typically having a temperature of about 350°C is discharged via a flue gas outlet 8 to a filter unit 9 comprising a water selective hydrophilic membrane 10, such as a hydrophilic ceramic membrane. Water permeates through the membrane 10 and is subsequently condensed. In this stage about 70 wt% of the water content in the flue gas can be recollected.

Part of the separated water is subsequently returned via a return line 11 to the CO shift cell 5 and used in the water-gas shift process.

The filtered and dehydrated flue gas is passed from the filter unit 8 to a downstream heat recovery unit 12 where heat is recovered from the hot flue gases to maximize energy efficiency. In this stage the flue gasses are cooled to a temperature above the dew point to prevent corrosion of the used equipment. Since the flue gases are dehydrated, the dew point is substantially lowered, so more heat can be recollected from the flue gases. As a result, the overall process efficiency is substantially improved.

Part of the water separated by the filter unit 8 is transported via a line 13, e.g., for reuse as make-up water in a steam cycle or as cooling water.

The membrane filter 10 can for instance be a hollow fiber membrane positioned in a flow path of flue gas discharged from a combustor, preferably as much downstream as possible.

The hollow fiber membrane may for instance comprise an array of tubular modules. Hot flue gas passes the modules, which extract water from the flue gas. The outlets of the modules can connect to a vacuum chamber where the recovered water is collected and condensed.

## Claims

1. A power plant (1) comprising:
a combustor (7) with a flue gas outlet (8) and one or more water selective separators (9) downstream of the flue gas outlet to separate water from the flue gas,
a CO shift cell (5) with a syngas inlet, a water inlet and an outlet operatively connected to a syngas inlet of the combustor (7) for the transport of H2 enriched syngas to the combustor,
wherein a water return line (11) is configured to return separated water from the one or more water selective separators (9) to the water inlet of the CO shift cell (5).

2. A power plant according to claim 1 comprising a heat recovery unit (12) downstream of the one or more water selective separators (9) for extracting heat from the flue gas.

3. A power plant according to claim 1 or 2 wherein the one or more water selective separators (9) comprise a hydrophilic ceramic membrane (10).

4. A power plant according to any one of the preceding claims wherein the one or more water selective separators (9) comprise a hydrophilic stainless steel membrane.

5. A power plant according to any one of the preceding claims wherein the one or more water selective separators (9) include an ultrafiltration membrane.

6. A power plant according to any one of the preceding claims wherein the one or more water selective separators (9) include an microfiltration membrane.

7. A process for generating power by combustion of a syngas feed in a combustor (7), wherein water is separated from flue gas discharged from the combustor, and wherein at least a part of the separated water is returned to the syngas feed to increase its hydrogen content by a water-gas shift reaction before the syngas feed is fed to the combustor (7).

8. A process according to claim 7, wherein at least a part of the separated water is fed to a steam cycle as make-up water.

9. A process according to claims 7 or 8, wherein at least a part of the water is separated from the flue gas by permeation through one or more membranes followed by condensation.

## Patentansprüche

1. Kraftwerk (1), Folgendes umfassend:
eine Brennkammer (7) mit einem Rauchgasauslass (8) und einem oder mehreren wasserselektiven Abscheidern (9) stromabwärts des Rauchgasauslasses, um Wasser von dem Rauchgas abzuscheiden,
eine CO-Shiftzelle (5) mit einem Synthesegaseinlass, einem Wassereinlass und einem - auslass, die für den Transport von mit H2 angereichertem Synthesegas an die Brennkammer mit einem Synthesegaseinlass der Brennkammer (7) wirkverbunden sind,
wobei eine Wasserrückleitung (11) konfiguriert ist, um abgeschiedenes Wasser von dem einen oder den mehreren wasserselektiven Abscheidern (9) zu dem Wassereinlass der CO-Shiftzelle (5) zurückzuleiten.

2. Kraftwerk nach Anspruch 1, das eine Wärmerückgewinnungseinheit (12) stromabwärts des einen oder der mehreren wasserselektiven Abscheider (9) zum Gewinnen von Wärme aus dem Rauchgas umfasst.

3. Kraftwerk nach Anspruch 1 oder 2, wobei der eine oder die mehreren wasserselektiven Abscheider (9) eine hydrophile Keramikmembran (10) umfassen.

4. Kraftwerk nach einem der vorhergehenden Ansprüche, wobei der eine oder die mehreren wasserselektiven Abscheider (9) eine hydrophile Edelstahlmembran umfassen.

5. Kraftwerk nach einem der vorhergehenden Ansprüche, wobei der eine oder die mehreren wasserselektiven Abscheider (9) eine Ultrafiltrationsmembran enthalten.

6. Kraftwerk nach einem der vorhergehenden Ansprüche, wobei der eine oder die mehreren wasserselektiven Abscheider (9) eine Mikrofiltrationsmembran enthalten.

7. Vorgang zum Erzeugen von Strom durch ein Verbrennen einer Synthesegaszufuhr in einer Brennkammer (7), wobei Wasser von dem aus der Brennkammer ausgestoßenen Rauchgas abgeschieden wird, und wobei wenigstens ein Teil des abgeschiedenen Wassers zu der Synthesegaszufuhr zurückgeleitet wird, um dessen Wasserstoffgehalt durch eine Wasser-Gas-Shiftreaktion zu erhöhen, bevor die Synthesegaszufuhr der Brennkammer (7) zugeführt wird.

8. Vorgang nach Anspruch 7, wobei wenigstens ein Teil des abgeschiedenen Wassers an einen Dampfkreislauf als Zusatzwasser zugeführt wird.

9. Vorgang nach Anspruch 7 oder 8, wobei wenigstens ein Teil des Wassers durch Permeation durch eine oder mehrere Membranen, gefolgt von Kondensation, von dem Rauchgas abgeschieden wird.

## Revendications

1. Centrale électrique (1) comprenant :
une chambre de combustion (7) dotée d'une sortie de gaz de combustion (8) et d'un ou plusieurs séparateurs sélectifs d'eau (9) en aval de la sortie de gaz de combustion afin de séparer l'eau du gaz de combustion, une cellule de conversion de CO (5) dotée d'une entrée de gaz de synthèse, d'une entrée d'eau et d'une sortie raccordée de manière fonctionnelle à une entrée de gaz de synthèse de la chambre de combustion (7) pour le transport de gaz de synthèse enrichi en H2 dans le compresseur, dans lequel une conduite de retour d'eau (11) est conçue pour faire retourner l'eau séparée du ou des séparateurs sélectifs d'eau (9) dans l'entrée d'eau de la cellule de conversion de CO (5).

2. Centrale électrique selon la revendication 1, comprenant une unité de récupération de chaleur (12) en aval du ou des séparateurs sélectifs d'eau (9) pour extraire de la chaleur du gaz de combustion.

3. Centrale électrique selon la revendication 1 ou 2, dans laquelle le ou les séparateurs sélectifs d'eau (9) comprennent une membrane céramique hydrophile (10).

4. Centrale électrique selon l'une quelconque des revendications précédentes, dans laquelle le ou les séparateurs sélectifs d'eau (9) comprennent une membrane hydrophile en acier inoxydable.

5. Centrale électrique selon l'une quelconque des revendications précédentes, dans laquelle le ou les séparateurs sélectifs d'eau (9) incluent une membrane d'ultrafiltration.

6. Centrale électrique selon l'une quelconque des revendications précédentes, dans laquelle le ou les séparateurs sélectifs d'eau (9) incluent une membrane de microfiltration.

7. Procédé de production d'énergie par combustion d'une alimentation de gaz de synthèse dans une chambre de combustion (7), dans laquelle l'eau est séparée du gaz de combustion évacué du compresseur, et dans laquelle au moins une partie de l'eau séparée est retournée dans l'alimentation en gaz de synthèse pour augmenter sa teneur en hydrogène par une réaction du gaz à l'eau avant l'alimentation du gaz de synthèse dans la chambre de combustion (7).

8. Procédé selon la revendication 7, dans lequel au moins une partie de l'eau séparée est alimentée dans un cycle de vapeur en tant qu'eau d'appoint.

9. Procédé selon la revendication 7 ou 8, dans lequel au moins une partie de l'eau est séparée du gaz de combustion par perméation à travers une ou plusieurs membranes suivie d'une condensation.
